# EUROPEAN PATENT SPECIFICATION

(11) **EP 3 528 474 B1**
(45) Date of publication and mention of the grant of the patent: **16.09.2020**
(21) Application number: 18865332.3
(22) Date of filing: 12.02.2018
(51) Int. Cl.: H04L 29/08, H04L 29/06, G06Q 30/02, G06Q 10/08

(54) **WEBPAGE ADVERTISEMENT ANTI-SHIELDING METHODS AND CONTENT DISTRIBUTION NETWORK**
VERFAHREN FÜR WERBUNGSBLOCKIERSCHUTZ EINER WEBSEITE UND INHALTSBEREITSTELLUNGSNETZWERK
PROCÉDÉS D'ANTI-PROTECTION DE PUBLICITÉ DANS UNE PAGE WEB ET RÉSEAU DE DISTRIBUTION DE CONTENU

(30) Priority: 04.01.2018 CN 201810007922
(43) Date of publication of application: 21.08.2019
(73) Proprietor: Wangsu Science & Technology Co., Ltd., Shanghai 200030 (CN)
(72) Inventor: ZHAO, Zhiwen, Shanghai 200030 (CN); LIN, Tumu, Shanghai 200030 (CN); ZHOU, Jian, Shanghai 200030 (CN)
(74) Representative: Hanna Moore + Curley
(86) International application number: PCT/CN2018/076410
(87) International publication number: WO 2019/134219

(56) References cited:
- CN-A- 105 871 810
- CN-A- 105 930 512
- CN-A- 106 953 865
- US-A1- 2009 254 633
- US-A1- 2016 253 718

## Description

### FIELD OF THE DISCLOSURE

The present disclosure generally relates to the field of Internet technology and, more particularly, relates to a webpage advertisement anti-blocking method, and a content delivery network.

### BACKGROUND

The advertisements on the webpages are ubiquitous, and are important sources of income for webpage administrators. Online advertisements may be in the form of banners, pop-ups, embedded pages, etc., and may be audio content, text, images, or visual content of other multimedia content. However, since most users do not want to see the advertisements on the webpages, advertisement blocking tools have thus been developed to block advertisements on the webpages.

In general, advertisement blocking tools come in many forms. For example, the advertisement blocking tools may be a software application, a browser component or extension, an add-on, a script, or a service that is used in conjunction with a web browsing application (such as Chrome, Internet Explorer, and Firefox), etc. The advertisement blocking tools usually work on the client terminals. The general method used by the advertisement blocking tools is to blacklist the communication addresses of the advertisement servers that the webpages need to access, so that the client terminals' accesses to these advertisement servers are blocked, resulting in webpages not being able to get the advertising contents. The advertisement blocking tools affect the advertisement revenue of the webpage administrators, and also prevent the marketing, promotion, and information dissemination of products and services of related businesses. Therefore, currently, there is a need to ensure that advertising contents can be presented on the users' devices in an expected manner.

At present, advertisement anti-blocking methods generally include encrypting or adding interfering elements to the communication addresses of the advertisement servers, so as to make the blacklist of the advertisement blocking tools unresponsive, or employing intermediate proxy servers to pass the advertisement requests. However, with the updating of the blacklist of the advertisement blocking tools, the communication addresses with the encryption or interfering elements or even the communication addresses of the intermediate proxy servers may also be added to the blacklist, which makes the existing advertisement anti-blocking methods ineffective. Therefore, there is a need for a more effective advertisement anti-blocking method.

Reference is made to US20160253718 which has been cited as relating to the state of the art. US20160253718 relates to systems and methods to bypass online advertisement blockers. The arrangement is described as including a bypass loader and a bypass proxy

### BRIEF SUMMARY OF THE DISCLOSURE

The purpose of the present disclosure is to provide a webpage advertisement anti-blocking method, a content delivery network, and a client terminal thereof, that may prevent advertisement requests from being blocked.

It will be appreciated that the scope is in accordance with the claims. Accordingly, there is provides a webpage advertisement anti-blocking method for a content delivery network method as defined in claim 1, a content delivery network as defined in claim 11, and a webpage advertisement anti-blocking method for a client terminal as defined in claim 13. Further features are provided in accordance with the dependent claims.

To achieve the above purpose, in one aspect, the present disclosure provides a webpage advertisement anti-blocking method, and the method may be applied to a content delivery network. The method includes: receiving an access request for a target page issued by a client terminal, and in response to the access request, feeding back a response including a detection script to the client terminal, where the detection script, when running on the client terminal, detects whether there exists an advertisement blocking component on the client terminal and whether the client terminal supports a specified transmission protocol, in which the specified transmission protocol is WebRTC protocol or WebSocket protocol, and determines, based on a detection result on the client terminal, whether to transmit loading information of the target page to an advertisement request rewriting module, where the loading information is page code that can be executed by the client terminal, when it is determined that an original advertisement request not issued is in a blocked state, to allow the advertisement request rewriting module to generate a rewritten request complying with the specified transmission protocol corresponding to the original advertisement request included in the loading information, and the rewritten request being issued by the client terminal.

To achieve the above purpose, in another aspect, the present disclosure further provides a content delivery network. The content delivery network comprises an edge node and an advertisement request rewriting module, where: the edge node is configured to receive an access request for a target page issued by a client terminal, and in response to the access request, feed back a response including a detection script to the client terminal, where the detection script, when running on the client terminal, detects whether there exists an advertisement blocking component on the client terminal and whether the client terminal supports a specified transmission protocol, and determines whether to transmit loading information of the target page to an advertisement request rewriting module based on a detection result on the client terminal; and the advertisement request rewriting module is configured to rewrite an advertisement request included in the loading information as a rewritten request complying with the specified transmission protocol, and provide the edge node with the loading information written with the included rewritten request.

To achieve the above purpose, in another aspect, the present disclosure further provides a webpage advertisement anti-blocking method, and the method may be applies to a client terminal. The method includes: issuing an access request for a target page to an edge node in a content delivery network, and receiving a response including a detection script fed back by the edge node; running the detection script to detect whether there exists an advertisement blocking component and whether a specified transmission protocol is supported, and to determine whether to transmit loading information of the target page to an advertisement request rewriting module based on a detection result, to allow the advertisement request rewriting module to rewrite an advertisement request included in the loading information as a rewritten request complying with the specified transmission protocol; when running the loading information, issuing the rewritten request to a request conversion server in the content delivery network to allow the request conversion server to restore the rewritten request to the original advertisement request and obtain a corresponding advertisement resource from an advertisement server based on the restored advertisement request; and receiving the advertisement resource fed back by the request conversion server.

As can be seen from the above, in the technical solutions provided by the present disclosure, when the client terminal issues an access request for a target page, the edge node in the content delivery network may determine whether the operator of the target page has applied for anti-blocking service. If the client terminal has applied for the service, a detection script may be fed back to the client terminal. The detection script may automatically run on the client terminal, and detect whether there exists an advertisement blocking component on the client terminal. If there exists an advertisement blocking component on the client terminal, the detection script may rewrite the advertisement request on the page to a request that complies with another transmission protocol. In this way, the rewritten request may not be blocked by the advertisement blocking component, so that the corresponding advertisement resource can be loaded smoothly. Specifically, after detecting the detection result corresponding to the client terminal, the client terminal may re-generate an access request for the target page, but with the detection result added into the access request. The access request with the added detection result is re-issued to the edge node. The edge node may proceed accordingly based on the detection result included in the access request. Specifically, if there exists an advertisement blocking component on the client terminal, the edge node may first obtain the loading information of the page from the source station server based on the access request. The loading information is then transmitted to the advertisement request rewriting module of the content delivery network. The advertisement request rewriting module may rewrite the advertisement request in the loading information as a rewritten request complying with a specified transmission protocol according to the specified transmission protocol supported by the client terminal, and write the rewritten request into the loading information. In this way, when the client terminal runs the loading information written with the included rewritten request, the rewritten request may be transmitted to the request conversion server in the content delivery network. Since the rewritten request is not in the blacklist of the advertisement blocking component, it can thus be normally issued by the client terminal. After receiving the rewritten request, the request conversion server may restore the rewritten request to the original advertisement request and obtain the corresponding advertisement resource from the advertisement server. After all, the obtained advertisement resource may be fed back to the client terminal, so that the advertisement on the page can be displayed on the client terminal as usual. In the above-described technical solutions, the specified transmission protocol differs from the protocol followed by the advertisement request. For example, the advertisement request follows the HTTP protocol, while the specified transmission protocol may be a WebRTC protocol or a WebSocket protocol. Since the blacklist in the advertisement blocking components usually only updates HTTP requests, it may not block a rewritten request. In addition, the request conversion server in the content delivery network usually does not display the communication address, and thus it is impossible to block the communication address of the request conversion server. In this way, the technical solutions provided by the present disclosure may more effectively prevent advertisement requests from being blocked, and thus the benefits of the webpage administrators and advertisement distributors can be ensured.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a webpage advertisement anti-blocking method according to someone embodiments of the present disclosure;
FIG. 2 is a schematic diagram showing execution of a detection script according to some embodiments of the present disclosure;
FIG. 3 is a flowchart of rewriting an advertisement request according to some embodiments of the present disclosure;
FIG. 4 is a flowchart showing operation of a request conversion server according to some embodiments of the present disclosure;
FIG. 5 is an interactive diagram of various components in a content delivery network according to some embodiments of the present disclosure;
FIG. 6 is a structural schematic diagram of a client terminal according to some embodiments of the present disclosure; and
FIG. 7 is a structural schematic diagram of a computer terminal according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings.

### Embodiment 1

The present disclosure provides a webpage advertisement anti-blocking method, which is applied to a content delivery network (CDN). The method may include:

receiving an access request for a target page issued by a client terminal, and in response to the access request, feeding back a response including a detection script to the client terminal, where the detection script, when running on the client terminal, detects whether there exists an advertisement blocking component on the client terminal and whether the client terminal supports a specified transmission protocol, and determines, based on a detection result on the client terminal, whether to transmit loading information of the target page to an advertisement request rewriting module, to allow the advertisement request rewriting module to rewrite an advertisement request included in the loading information as a rewritten request complying with the specified transmission protocol.

In the disclosed embodiment, when accessing a target page, a client terminal may issue an access request for the target page. The access request may be received by a nearby edge node in the CDN. After receiving the access request for the target page, the edge node may first determine whether the operator of the target page has applied for advertisement anti-blocking service. Specifically, target pages that currently have applied for the advertisement anti-blocking service may be recorded in the edge node in advance. For example, the edge node may record the IP addresses corresponding to the target pages that have applied for the advertisement anti-blocking service in an advertisement anti-blocking list. In this way, upon receiving the access request, the edge node may extract the IP address associated with the request from the access request, and determine whether the extracted IP address is in the list. If the extracted IP address is in the list, it indicates that the operator of the target page has applied for the advertisement anti-blocking service.

In the disclosed embodiment, when it is determined that the target page is in the advertisement anti-blocking list, the edge node may take measures for advertisement anti-blocking. Otherwise, the access request is processed in a normal way. Specifically, after it is determined that the target page is in the advertisement anti-blocking list, the edge node may feed back a response including a detection script to the client terminal. The detection script may be a piece of program code stored in advance in the edge node that can be executed. After the detection script is received by the client terminal, the client terminal may automatically run the detection script. When the detection script is running, it may detect whether there exists an advertisement blocking component on the client terminal. The specific detection method may include: at first, acquiring a target address in a blocking list of the advertisement blocking component. The target address may be any address in the blocking list. In order to share the addresses in the blocking list, different advertisement blocking components usually add addresses that need to be blocked into a shared library. In the present disclosure, any target address in the shared library may be obtained, and the page resource associated with the target address may be loaded. If the page resource can be loaded successfully, it indicates that no component for blocking the advertisement requests is installed on the client terminal. At this point, the running detection script may designate an indicator to indicate that there is no advertisement blocking component on the client terminal. If the page resource fails to be loaded, it indicates that there is a component for blocking the advertisement requests on the client terminal. At this point, the running detection script may designate an indicator to indicate that there exists an advertisement blocking component on the client terminal.

In the disclosed embodiment, when it is detected that there exists an advertisement blocking component on the client terminal, it may be further detected whether the client terminal supports a specified transmission protocol. The specified transmission protocol may be different from the transmission protocol used for the advertisement request. For example, currently, the advertisement requests generally use the HTTP protocol. In the disclosed embodiment, the specified transmission protocol may be a Web Real-Time Communication (WebRTC) protocol or a WebSocket protocol. Apparently, in real application scenarios, other protocols that are different from the HTTP protocol may also be applicable, which are not limited by the present disclosure. Since the WebRTC protocol has a wider range of applications than the WebSocket protocol, in the disclosed embodiment, it may be preferentially detected whether the client terminal supports a WebRTC protocol. If the client terminal does not support a WebRTC protocol, it may be further detected whether the client terminal supports a WebSocket protocol. In this way, after detecting whether the client terminal has an advertisement blocking component and whether the client terminal supports a specified transmission protocol, a corresponding detection result may be generated.

In the disclosed embodiment, after the detection result is obtained, if there exists an advertisement blocking component on the client terminal, the edge node cannot directly provide the loading information of the target page to the client terminal. Otherwise, the advertisement resource on the target page will be blocked by the advertisement blocking component. In view of this, the loading information of the target page may be transmitted to an advertisement request rewriting module. It should be noted that the advertisement request rewriting module may be located on the server side of the content delivery network, or on the client terminal side. Specifically, an advertisement anti-blocking script including an advertisement URL (Uniform Resource Locator) rewriting script may be embedded on the target page. The advertisement anti-blocking script first detects whether there exists an advertisement blocking component on the client terminal and detects whether the client terminal supports a specified transmission protocol. Based on the detection result, the loading information of the target page is collected. The collected loading information is transmitted to the advertisement URL rewriting script to be input into the URL rewriting logic. The advertisement URL rewriting script may serve as an execution script of the advertisement request rewriting module on the client terminal. The advertisement request rewriting module may rewrite the advertisement request included in the loading information as a rewritten request complying with the specified transmission protocol. Specifically, the advertisement request rewriting module may pre-run the loading information. When the loading information is executed, if an advertisement resource needs to be loaded on the page, an advertisement request for the advertisement resource will be issued. At this point, the advertisement request rewriting module may receive the advertisement request issued during the pre-running of the loading information. The advertisement requests usually have the HTTP protocol format. If the advertisement request is located in the blocking list of the advertisement blocking component, the request will be blocked by the advertisement blocking component. Therefore, when it is determined that the advertisement request is in a blocked state, the advertisement request rewriting module may generate a rewritten request complying with the specified transmission protocol corresponding to the advertisement request, and write the rewritten request into the loading information.

In the disclosed embodiment, after writing the rewritten request into the loading information, the advertisement request rewriting module may provide the loading information written with the included rewritten request to the edge node, to allow the edge node to feed back the loading information written with the included rewritten request to the client terminal.

In the disclosed embodiment, when the client terminal runs the loading information written with the included rewritten request, the rewritten request included therein may be issued. In the CDN, a server for processing the rewritten request complying with the specified transmission protocol may be configured in advance. Specifically, the server may be a request conversion server. The rewritten request issued by the client terminal may be received by the request conversion server. The request conversion server may restore the rewritten request to an advertisement request, obtain the corresponding advertisement resource from the advertisement server based on the restored advertisement request, and provide the obtained advertisement resource to the client terminal. In this way, the client terminal may obtain and display the advertisement resource as usual.

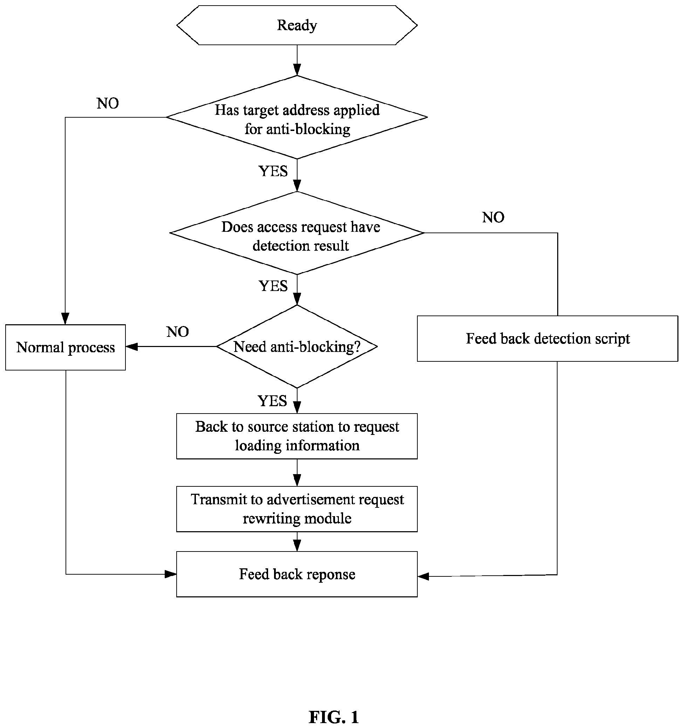

Specifically, referring to FIG. 1-FIG. 4, in some embodiments, the method includes the following steps.

S11: receiving a first access request for the target page issued by the client terminal and, in response to the first access request, feeding back the detection script to the client terminal, where the detection script, when running on the client terminal, detects whether exists the advertisement blocking component on the client terminal and whether the client terminal supports the specified transmission protocol, and generates a second access request for the target page, where the second access request includes the detection result on the client terminal.

Referring to FIG. 1, in the disclosed embodiment, when the client terminal accesses the target page, a first access request for the target page may be issued. The first access request may be received by a nearby edge node in the CDN. After receiving the first access request for the target page, the edge node may first determine whether the operator of the target page has applied for the advertisement anti-blocking service. Specifically, target pages that currently have applied for the advertisement anti-blocking service may be recorded in advance in the edge node. For example, the edge node may record the IP addresses corresponding to the target pages that have applied for the advertisement anti-blocking service in the advertisement anti-blocking list. In this case, upon receiving the first access request, the edge node may extract the IP address associated with the request from the first access request, and determine whether the extracted IP address is in the list. If the extracted IP address is in the list, it indicates that the operator of the target page has applied for the advertisement anti-blocking service.

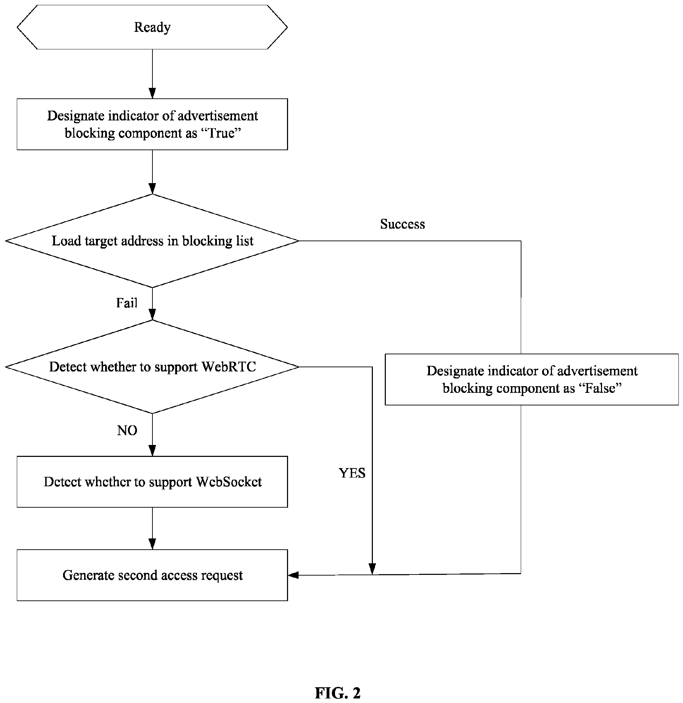

In the disclosed embodiment, the edge node may take measures for advertisement anti-blocking when it is determined that the target page is in the advertisement anti-blocking list. Otherwise, the first access request is processed in a normal way. Specifically, after it is determined that the target page is in the advertisement anti-blocking list, the edge node may feed back a detection script to the client terminal. The detection script may be a piece of program code stored in advance in the edge node that can be executed. After the detection script is received by the client terminal, the client terminal may automatically run the detection script. When the detection script is running, it may detect whether there exists an advertisement blocking component on the client terminal. The specific detection method may be: at first, obtaining a target address in a blocking list of the advertisement blocking component. The target address may be any address in the blocking list. In order to share the addresses in the blocking list, different advertisement blocking components usually add addresses that need to be blocked into a shared library. In the present disclosure, any target address may be obtained from the shared library. The page resource associated with the target address may then be loaded. If the page resource can be loaded successfully, it indicates that no component for blocking the advertisement requests is installed on the client terminal. At this point, the running detection script may designate an indicator to indicate that there is no advertisement blocking component on the client terminal. For example, "false" may be used as an indicator to indicate that there is no advertisement blocking component on the client terminal. If the page resource fails to be loaded, it indicates that there is a component for blocking the advertisement requests on the client terminal. At this point, the running detection script may designate an indicator to indicate that there exists an advertisement blocking component on the client terminal. For example, "true" may be used as an indicator to indicate that there exists an advertisement blocking component on the client terminal. Apparently, in actual application scenarios, as shown in the schematic diagram of FIG. 2, an indicator "true" may be designated in advance to indicate that there exists an advertisement blocking component on the client terminal. When it is detected later that there is no advertisement blocking component on the client terminal, the indicator "true" is changed to "false".

In the disclosed embodiment, when it is detected that there exists an advertisement blocking component on the client terminal, it may be further detected whether the client terminal supports a specified transmission protocol. The specified transmission protocol may be different from the transmission protocol used for the advertisement request. For example, the present advertisement requests generally use the HTTP protocol. In the disclosed embodiment, the specified transmission protocol may be a WebRTC protocol or a WebSocket protocol. Of course, in actual application scenarios, other protocols that are different from the HTTP protocol may also be applicable, which are not limited by the present disclosure. Because the WebRTC protocol has a wider range of applications than the WebSocket protocol, in the disclosed embodiment, it may be preferentially detected whether the client terminal supports a WebRTC protocol. If the client terminal supports a WebRTC protocol, the running detection script may designate a numerical value that signifies the support of the WebRTC protocol. For example, "0" may be used to indicate that the client terminal supports a WebRTC protocol. If the client terminal does not support a WebRTC protocol, the running script may further detect whether the client terminal supports a WebSocket protocol. If the client terminal supports the WebSocket protocol, the running script may designate a numerical value to signify the support of the WebSocket protocol. For example, "1" may be used to indicate that the client terminal supports a WebSocket protocol. If neither protocol is supported, no corresponding numerical value is designated. In this way, after detecting whether the client terminal has an advertisement blocking component and whether it supports a specified transmission protocol, a corresponding detection result may be generated. In the detection result, the above-designated indicators and numerical values may be included. In actual applications, after it is detected that there is no advertisement blocking component on the client terminal, since the advertisement request will not be blocked, there is no necessity to further detect whether the client terminal supports a specified transmission protocol. In this case, the final detection result may be, for example, "false", which indicates that there is no advertisement blocking component on the client terminal. The detection result may also be "true, 1", which indicates that there exists an advertisement blocking component on the client terminal, and the client terminal supports the WebSocket protocol. In actual applications, the detection result may also be expressed in the form of a cookie. In the detection result, a field for indicating the meaning of an indicator or a numerical value may also be added. For example, "shield=true" may be used to indicate that there is an advertisement blocking component.

In the disclosed embodiment, after obtaining the detection result, the running detection script may generate a second access request for the target page. The difference between the second access request and the first access request is that: the second access request includes a detection result in addition to the access address of the target page. Here, the client terminal may re-issue the second access request including the detection result to the edge node.

In some embodiments, considering that an access request received by an edge node may include a detection result (for example, a second access request), or may not include a detection result (for example, a first access request), the edge node only needs to feed back the detection script for an access request that does not include a detection result. Accordingly, when it is determined that the target page is in the advertisement anti-blocking list, the edge node may further determine whether the first access request includes a detection result. If the first access request does not include a detection result, the edge node feeds back the detection script to the client terminal, to generate a detection result on the client terminal.

S13: receiving the second access request issued by the client terminal, and obtaining the loading information of the target page from a source station server based on the second access request.

S15: transmitting the loading information to the advertisement request rewriting module of the content delivery network, to allow the advertisement request rewriting module to rewrite the advertisement request included in the loading information as the rewritten request complying with the specified transmission protocol, and receiving the loading information written with the included rewritten request provided by the advertisement request rewriting module.

In the disclosed embodiment, after receiving the second access request issued by the client terminal, the edge node may extract the detection result included in the second access request, and take corresponding measures according to the detection result. Specifically, if the detection result indicates that there is no advertisement blocking component on the client terminal, the edge node may process the second access request in a normal way. If the detection result indicates that there exists an advertisement blocking component on the client terminal, the edge node may first obtain the loading information of the target page from the source station server corresponding to the target page. The loading information may be page code that can be executed by the client terminal. When the loading information is executed, the client terminal may obtain each display element on the target page and eventually display the information on the target page.

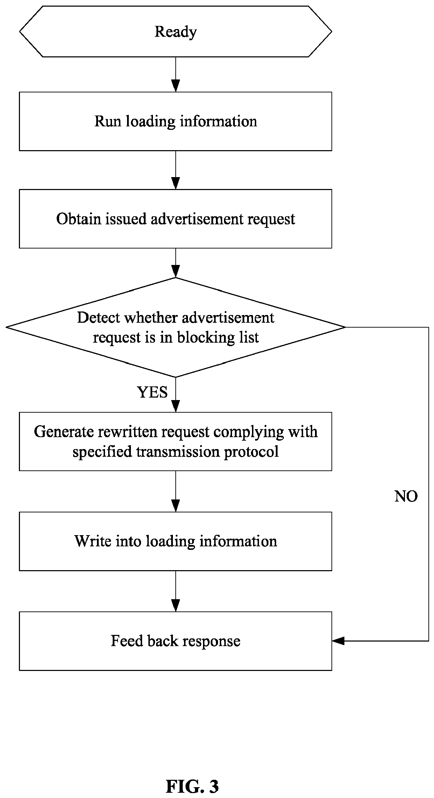

In the disclosed embodiment, because there exists an advertisement blocking component on the client terminal, the edge node may not directly provide the loading information to the client terminal. Otherwise, the advertisement resource on the target page will be blocked by the advertisement blocking component. In light of this, if an advertisement request rewriting module is located in the server of the content delivery network, the edge node may transmit the loading information to the advertisement request rewriting module of the content delivery network. The advertisement request rewriting module may rewrite the advertisement request included in the loading information as a rewritten request complying with the specified transmission protocol. Specifically, referring to FIG. 3, the advertisement request rewriting module may pre-run the loading information. When the loading information is executed, if an advertisement resource needs to be loaded on the page, an advertisement request for the advertisement resource will be issued. At this point, the advertisement request rewriting module may receive the advertisement request issued during the pre-running of the loading information. The advertisement requests usually have the HTTP protocol format. If the advertisement request is in the blocking list of the advertisement blocking component, the request will be blocked by the advertisement blocking component. Therefore, when it is determined that the advertisement request is in a blocked state, the advertisement request rewriting module may generate a rewritten request complying with the specified transmission protocol corresponding to the advertisement request, and write the rewritten request into the loading information. Here, the blocked state of the advertisement request may mean that the advertisement request is in the blocking list of the advertisement blocking component. When generating the rewritten request, the advertisement request rewriting module may rewrite the advertisement request according to the format requirement of the specified transmission protocol, thereby generating a rewritten request complying with the specified transmission protocol. The rewritten request may be written into the loading information of the target page. In this way, when the loading information is executed by the client terminal, the included advertisement request may be blocked by an advertisement blocking component, but the rewritten request can be issued as usual.

S17: feeding back the loading information written with the included rewritten request to the client terminal.

In the disclosed embodiment, after writing the rewritten request into the loading information, the advertisement request rewriting module may provide the loading information written with the included rewritten request to the edge node, to allow the edge node to feed back the loading information written with the included rewritten request to the client terminal.

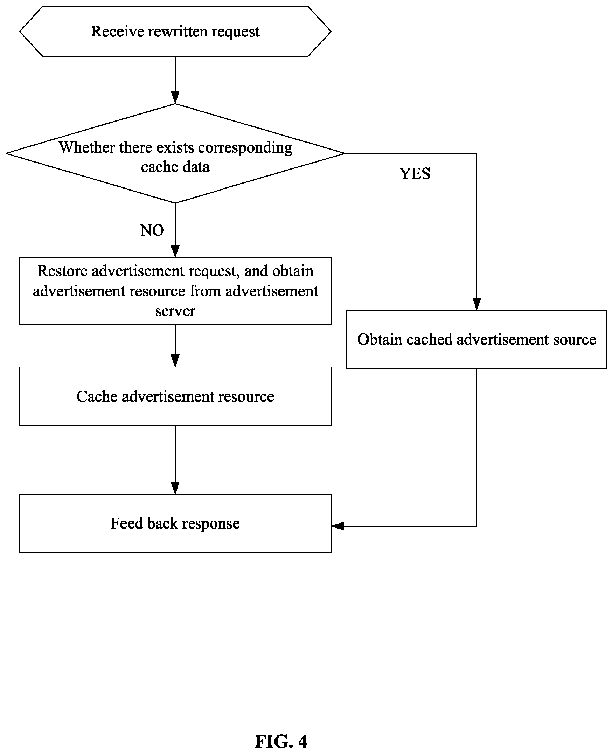

In the disclosed embodiment, when the client terminal runs the loading information written with the included rewritten request, the rewritten request included therein may be issued. In the CDN, a server for processing the rewritten request complying with the specified transmission protocol may be configured in advance. Specifically, referring to FIG. 4, the server may be a request conversion server. The rewritten request issued by the client terminal may be received by the request conversion server. The request conversion server may restore the rewritten request to an advertisement request, obtain the corresponding advertisement resource from the advertisement server based on the restored advertisement request, and provide the obtained advertisement resource to the client terminal. In this way, the client terminal may obtain and display the advertisement resource as usual.

In the disclosed embodiment, after the request conversion server obtains the corresponding advertisement resource, the request conversion server may cache the obtained advertisement resource. In this way, when the request conversion server receives a rewritten request associated with the advertisement resource again, the locally cached advertisement resource may be directly provided to the initiator of the request, thereby bypassing the process of obtaining the advertisement resource from the advertisement server, which reduces the client terminal response time. As can be seen, certain advertisement resources may be cached in the request conversion server in advance. In this way, when receiving a rewritten request issued by a client terminal, the request conversion server may determine whether there exists cache data corresponding to the rewritten request in the local. If there exists the cache data, the cache data may be provided to the client terminal. If there does not exist the cache data, the corresponding advertisement resource is then obtained from the advertisement server.

### Embodiment 2

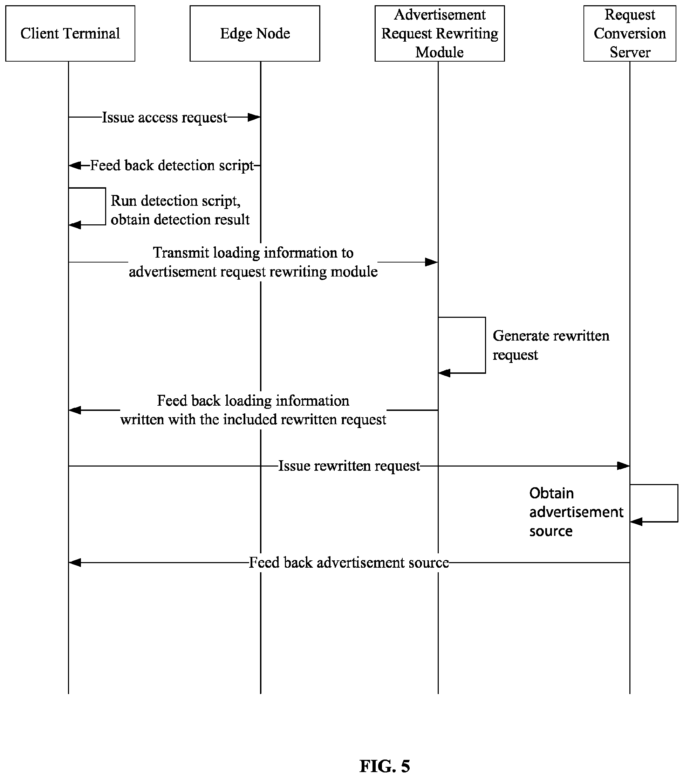

Referring to FIG. 5, the present disclosure further provides a content delivery network. The content delivery network comprises an edge node and an advertisement request rewriting module, where:
the edge node is configured to receive an access request for a target page issued by a client terminal, and in response to the access request, feed back a response including a detection script to the client terminal, where the detection script, when running on the client terminal, detects whether there exists an advertisement blocking component on the client terminal and whether the client terminal supports a specified transmission protocol, and determines whether to transmit loading information of the target page to an advertisement request rewriting module based on a detection result on the client terminal; and
the advertisement request rewriting module is configured to rewrite an advertisement request included in the loading information as a rewritten request complying with the specified transmission protocol, and provide the edge node with the loading information written with the included rewritten request.

In the disclosed embodiment, the content delivery network further includes a request conversion server, where the request conversion server is configured to receive the rewritten quest issued by the client terminal, restore the rewritten request to the advertisement request, obtain a corresponding advertisement resource from an advertisement server based on the restored advertisement request, and provide the obtained advertisement resource to the client terminal.

### Embodiment 3

The present disclosure further provides a webpage advertisement anti-blocking method, which may be applied to a client terminal. The method includes the following steps.

S21: issuing an access request for a target page to an edge node in a content delivery network, and receiving a response including a detection script fed back by the edge node.

S23: running the detection script to detect whether there exists an advertisement blocking component and whether a specified transmission protocol is supported, and to determine whether to transmit loading information of the target page to an advertisement request rewriting module based on a detection result, to allow the advertisement request rewriting module to rewrite an advertisement request included in the loading information as a rewritten request complying with the specified transmission protocol.

S25: when running the loading information, issuing the rewritten request to a request conversion server in the content delivery network to allow the request conversion server to restore the rewritten request to the advertisement request and obtain a corresponding advertisement resource from an advertisement server based on the restored advertisement request.

S27: receiving the advertisement resource fed back by the request conversion server.

In the disclosed embodiment, running the detection script includes:
obtaining in advance a target address in a blocking list of the advertisement blocking component, and loading a page resource associated with the target address; and
if the page resource is loaded successfully, designating an indicator to indicate that there does not exist an advertisement blocking component.

In the disclosed embodiment, the method further includes:
if the page resource fails to be loaded, designating an indicator to indicate that there exists an advertisement blocking component;
detecting whether the client terminal supports a WebRTC protocol, and if the client terminal supports a WebRTC protocol, designating a numerical value for signifying the support of the WebRTC protocol; and if the client terminal does not support a WebRTC protocol, detecting whether the client terminal supports a WebSocket protocol, and if the client terminal supports a WebSocket protocol, designating a numerical value for signifying the support of the WebSocket protocol; and
correspondingly, including the designated indicators and the designated numerical values in the detection result.

In the webpage advertisement anti-blocking method provided by the present embodiment, the specific implementation process of each step may refer to the description in Embodiment 1, which will not be described here.

### Embodiment 4

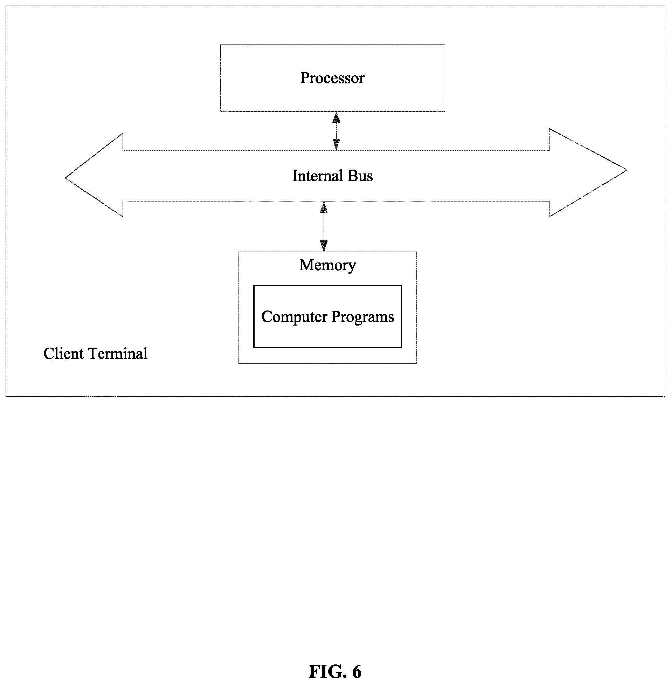

Referring to FIG. 6, the present disclosure further provides a client terminal. The client terminal comprises a memory and a processor, where the memory stores computer programs that, when executed by the processor, implement the following steps.

S21: issuing an access request for a target page to an edge node in a content delivery network, and receiving a response including a detection script fed back by the edge node.

S23: running the detection script to detect whether there exists an advertisement blocking component and whether a specified transmission protocol is supported, and to determine whether to transmit loading information of the target page to an advertisement request rewriting module based on a detection result, to allow the advertisement request rewriting module to rewrite an advertisement request included in the loading information as a rewritten request complying with the specified transmission protocol.

S25: when running the loading information, issuing the rewritten request to a request conversion server in the content delivery network to allow the request conversion server to restore the rewritten request to the advertisement request and obtain a corresponding advertisement resource from an advertisement server based on the restored advertisement request.

S27: receiving the advertisement resource fed back by the request conversion server.

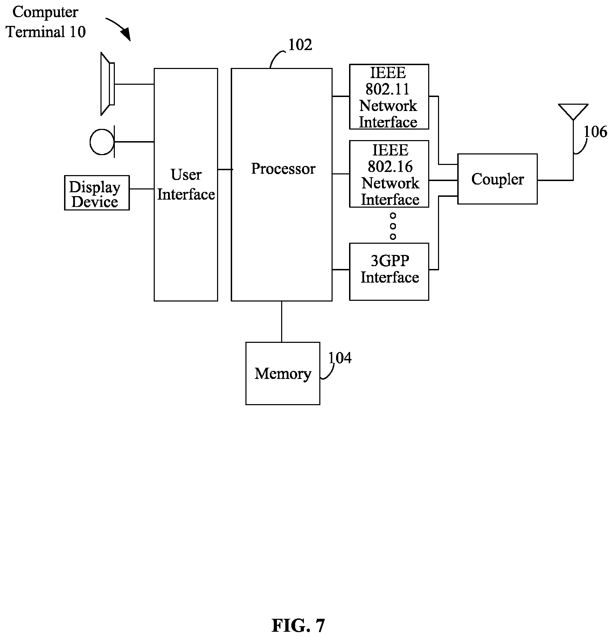

Referring to FIG. 7, in the present disclosure, the technical solutions in the foregoing embodiments may be applied to a computer terminal 10 shown in FIG. 7. The computer terminal 10 may include one or more (only one is shown in the figure) processors 102 (a processor 102 may include, but is not limited to, a processing device such as a microprocessor MCU or a programmable logic device FPGA), a memory 104 for storing data, and a transmission device 106 for communication purpose. Persons of ordinary skill in the art may understand that the structure shown in FIG. 7 is provided by way of illustration, but not by way of limitation of the structures of the above-described electronic devices. For example, the computer terminal 10 may also include more or fewer components than those shown in FIG. 7, or have a different configuration than that shown in FIG. 7.

The memory 104 may be used to store software programs and modules of application software. The processor 102 implements various functional applications and data processing by executing software programs and modules stored in the memory 104. The memory 104 may include a high-speed random access memory, and a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network include, but are not limited to, the Internet, an intranet, a local area network, a mobile communication network, and combinations thereof.

The transmission device 106 is configured to receive or transmit data via the network. The aforementioned specific examples of the network may include a wireless network provided by the communication provider of the computer terminal 10. In one application, the transmission device 106 includes a network interface controller (NIC) that may be connected to other network devices through the base stations to allow it to communicate with the Internet. In one application, the transmission device 106 may be a Radio Frequency (RF) module that is configured to communicate with the Internet via a wireless approach.

The sequence numbers of the foregoing embodiments of the present disclosure are merely for descriptive purpose, and do not represent advantages and disadvantages of the embodiments.

Each embodiment in this specification is described in a progressive manner. The same or similar parts in each embodiment may be referred to each other. Each embodiment focuses on the difference from other embodiments. In particular, for the embodiments with respect to the content delivery network and the client terminal, reference may be made in detail to the foregoing embodiments for the methods.

As can be seen from the above, in the technical solutions provided by the present disclosure, when the client terminal issues an access request for a target page, the edge node in the content delivery network may determine whether the operator of the target page has applied for anti-blocking service. If the client terminal has applied for the service, a detection script may be fed back to the client terminal. The detection script may automatically run on the client terminal, and detect whether there exists an advertisement blocking component on the client terminal. It there exists an advertisement blocking component on the client terminal, the detection script may rewrite the advertisement request on the page to a request that complies with another transmission protocol. In this way, the rewritten request may be not blocked by the advertisement blocking component, so that the corresponding advertisement resource can be loaded smoothly. Specifically, after detecting the detection result corresponding to the client terminal, the client terminal may re-generate an access request for the target page, but with the detection result added into the access request. The access request with the added detection result is re-issued to the edge node. The edge node may proceed accordingly based on the detection result included in the request. Specifically, if there exists an advertisement blocking component on the client terminal, the edge node may first obtain the loading information of the page from the source station server based on the access request. The loading information is then transmitted to the advertisement request rewriting module of the content delivery network. The advertisement request rewriting module may rewrite the advertisement request in the loading information as a rewritten request complying with a specified transmission protocol according to the specified transmission protocol supported by the client terminal, and write the rewritten request into the loading information. In this way, when the client terminal runs the loading information written with the included rewritten request, the rewritten request may be transmitted to the request conversion server in the content delivery network. Since the rewritten request is not in the blacklist of the advertisement blocking component, it can thus be normally issued by the client terminal. After receiving the rewritten request, the request conversion server may restore the rewritten request to the original advertisement request and obtain the corresponding advertisement resource from the advertisement server. After all, the obtained advertisement resource may be fed back to the client terminal, so that the advertisement on the page can be displayed on the client terminal as usual. In the above-described technical solutions, the specified transmission protocol differs from the protocol followed by the advertisement request. For example, the advertisement request follows the HTTP protocol, while the specified transmission protocol may be a WebRTC protocol or a WebSocket protocol. Since the blacklist in the advertisement blocking components usually only updates HTTP requests, it may not block a rewritten rewritten request. In addition, the request conversion server in the content delivery network usually does not display the communication address, and thus it is impossible to block the communication address of the request conversion server. In this way, the technical solutions provided by the present disclosure may more effectively prevent advertisement requests from being blocked, and thus the benefits of the webpage administrators and advertisement distributors can be ensured.

Through the foregoing description of the embodiments, it is clear to those skilled in the art that the various embodiments may take the form of a software plus a necessary general hardware platform implementation, and entirely a hardware implementation. In light of this understanding, the technical solutions, or essentially the parts that contribute to the current technology, may be embodied by way of a software product. The computer software product may be stored in a computer-readable storage medium, such as a ROM/RAM, a magnetic disc, an optical disc, etc., and include a variety of programs that cause a computing device (which may be a personal computer, a server, or a network device, etc.) to implement each embodiment or methods described in certain parts of each embodiment.

## Claims

1. A webpage advertisement anti-blocking method for a content delivery network, the
method comprising:
receiving an access request for a target page issued by a client terminal, and in response to the access request, feeding back a response including a detection script to the client terminal, wherein the detection script, when running on the client terminal, detects whether there exists an advertisement blocking component on the client terminal and whether the client terminal supports a specified transmission protocol, in which the specified transmission protocol is WebRTC protocol or WebSocket protocol, and determines, based on a detection result on the client terminal, whether to transmit loading information of the target page to an advertisement request rewriting module, where the loading information is page code that can be executed by the client terminal, when it is determined that an original advertisement request not issued is in a blocked state, to allow the advertisement request rewriting module to generate a rewritten request complying with the specified transmission protocol, the rewritten request corresponding to the original advertisement request included in the loading information, and the rewritten request being issued by the client terminal.

2. The method according to claim 1, wherein the loading information of the target page is obtained by:
receiving a first access request for the target page issued by the client terminal, and, in response to the first access request, feeding back the detection script to the client terminal, wherein the detection script, when running on the client terminal, detects whether exists an advertisement blocking component on the client terminal and whether the client terminal supports a specified transmission protocol, and generates a second access request for the target page, wherein the second access request includes the detection result on the client terminal; and
receiving the second access request issued by the client terminal, and obtaining the loading information of the target page from a source station server based on the second access request.

3. The method according to claim 1 or 2, wherein the advertisement request rewriting module is located in the content delivery network, and the method further includes:
transmitting the loading information to the advertisement request rewriting module of the content delivery network, to allow the advertisement request rewriting module to rewrite the original advertisement request included in the loading information as the rewritten request complying with the specified transmission protocol, and receiving the loading information written with the included rewritten request provided by the advertisement request rewriting module; and
feeding back the loading information written with the included rewritten request to the client terminal.

4. The method according to claim 3, after feeding back the loading information written with the included rewritten request to the client terminal, the method further includes:
when the client terminal runs the loading information, issuing, by the client terminal, the rewritten request to a request conversion server in the content delivery network, wherein:
the request conversion server restores the rewritten request to the original advertisement request, obtains a corresponding advertisement resource from an advertisement server based on the restored original advertisement request, and provides the obtained advertisement resource to the client terminal.

5. The method according to claim 4, when the request conversion server receives the rewritten request issued by the client terminal, the method further includes:
determining, by the request conversion server, whether there exists cache data corresponding to the rewritten request;
if there exists the cache data corresponding to the rewritten request, providing, by the request conversion server, the cache data to the client terminal; and
if there does not exist the cache data, obtaining, by the request conversion server, the corresponding advertisement resource from the advertisement server, after obtaining the advertisement resource from the corresponding advertisement server, the method further includes:
caching, by the request conversion server, the obtained advertisement resource, to allow the cached advertisement resource to be fed back to an initiator of the rewritten request when the rewritten request for the advertisement resource is received again.

6. The method according to claim 2, wherein obtaining the loading information of the target page from the source station server based on the second access request further includes:
extracting the detection result in the second access request, and obtaining the loading information of the target page from the source station server when the detection result indicates that there exists the advertisement blocking component on the client terminal.

7. The method according to claim 2, before feeding back the detection script to the client terminal, the method further includes:
determining whether the target page is in an advertisement anti-blocking list;
when it is detected that the target page is in the advertisement anti-blocking list, detecting whether the first access request includes a detection result; and
when it is detected that the first access request does not include a detection result, feeding back the detection script to the client terminal.

8. The method according to claim 1, when the detection script runs on the client terminal, the method further includes:
obtaining a target address in a blocking list of the advertisement blocking component, and loading a page resource associated with the target address; and
if the page resource is successfully loaded, designating an indicator to indicate that there does not exist an advertisement blocking component on the client terminal.

9. The method according to claim 8, further comprising:
if the page resource fails to be loaded, designating an indicator to indicate that there exists an advertisement blocking component on the client terminal;
detecting whether the client terminal supports a WebRTC protocol, and if the client terminal supports a WebRTC protocol, designating a numerical value for signifying the support of the WebRTC protocol, and if the client terminal does not support a WebRTC protocol, detecting whether the client terminal supports a WebSocket protocol, and if the client terminal supports a WebSocket protocol, designating a numerical value for signifying the support of the WebSocket protocol; and
including the designated indicators and the designated numerical values in the detection result.

10. The method according to claim 1, wherein generating, by the advertisement request rewriting module, the rewritten request complying with the specified transmission protocol, the rewritten request corresponding to the original advertisement request included in the loading information further includes:
pre-running the loading information, by the advertisement request rewriting module, and obtaining the original advertisement request issued during the pre-running of the loading information; and
when it is determined that the original advertisement request is in a blocked state, generating, by the advertisement request rewriting module, the rewritten request complying with the specified transmission protocol corresponding to the original advertisement request, and writing the rewritten request into the loading information.

11. A content delivery network, comprising an edge node and an advertisement request rewriting module, wherein:
the edge node is configured to receive an access request for a target page issued by a client terminal, and in response to the access request, feed back a response including a detection script to the client terminal, wherein the detection script, when running on the client terminal, detects whether there exists an advertisement blocking component on the client terminal and whether the client terminal supports a specified transmission protocol, in which the specified transmission protocol is WebRTC protocol or WebSocket protocol, and determines whether to transmit loading information of the target page to an advertisement request rewriting module based on a detection result on the client terminal, where the loading information is page code that can be executed by the client terminal; and
the advertisement request rewriting module is configured to generate a rewritten request complying with the specified transmission protocol, the rewritten request corresponding to an original advertisement request included in the loading information, when it is determined that the original advertisement request not issued is in a blocked state, provide the edge node with the loading information written with the included rewritten request, and the rewritten request being issued by the client terminal.

12. The content delivery network according to claim 11, further comprising a request conversion server, wherein:
the request conversion server is configured to receive the rewritten request issued by the client terminal, restore the rewritten request to the original advertisement request, obtain a corresponding advertisement resource from an advertisement server based on the restored original advertisement request, and provide the obtained advertisement resource to the client terminal.

13. A webpage advertisement anti-blocking method for a client terminal, comprising:
issuing an access request for a target page to an edge node in a content delivery network, and receiving a response including a detection script fed back by the edge node;
running the detection script to detect whether there exists an advertisement blocking component and whether a specified transmission protocol is supported, in which the specified transmission protocol is WebRTC protocol or WebSocket protocol, and to determine whether to transmit loading information of the target page to an advertisement request rewriting module based on a detection result, where the loading information is page code that can be executed by the client terminal, when it is determined that an original advertisement request not issued is in a blocked state, to allow the advertisement request rewriting module to generate a rewritten request complying with the specified transmission protocol, the rewritten request corresponding to the original advertisement request included in the loading information, and the rewritten request being issued by the client terminal;
when running the loading information, issuing the rewritten request to a request conversion server in the content delivery network to allow the request conversion server to restore the rewritten request to the original advertisement request and obtain a corresponding advertisement resource from an advertisement server based on the restored original advertisement request; and
receiving the advertisement resource fed back by the request conversion server.

14. The method according to claim 13, wherein running the detection script includes:
obtaining in advance a target address in a blocking list of the advertisement blocking component, and loading a page resource associated with the target address; and
if the page resource is loaded successfully, designating an indicator to indicate that there does not exist an advertisement blocking component.

15. The method according to claim 14, further comprising:
if the page resource fails to be loaded, designating an indicator to indicate that there exists an advertisement blocking component;
detecting whether the client terminal supports a WebRTC protocol, and if the client terminal supports a WebRTC protocol, designating a numerical value for signifying the support of the WebRTC protocol, and if the client terminal does not support a WebRTC protocol, detecting whether the client terminal supports a WebSocket protocol, and if the client terminal supports a WebSocket protocol, designating a numerical value for signifying the support of the WebSocket protocol; and
including the designated indicators and the designated numerical values in the detection result.

## Patentansprüche

1. Verfahren zum Verhindern der Blockierung von Webseitenwerbung für ein Content Delivery Network, das Verfahren Folgendes umfassend:
Empfangen einer Zugriffsanforderung für eine Zielseite, die von einem Client-Endgerät ausgegeben wird, und als Antwort auf die Zugriffsanforderung, Rückführen einer Antwort einschließlich eines Erkennungsskripts an das Client-Endgerät, wobei das Erkennungsskript, wenn es auf dem Client-Endgerät läuft, erkennt, ob auf dem Client-Endgerät eine Werbeblockierungskomponente vorhanden ist und ob das Client-Endgerät ein spezifiziertes Übertragungsprotokoll unterstützt, wobei das spezifizierte Übertragungsprotokoll das WebRTC-Protokoll oder das WebSocket-Protokoll ist, und basierend auf einem Erkennungsergebnis auf dem Client-Endgerät bestimmt, ob Ladeinformationen der Zielseite an ein Werbeanforderungs-Umschreibemodul übertragen werden sollen, wobei die Ladeinformationen Seitencode sind, der vom Client-Endgerät ausgeführt werden kann, wenn bestimmt wird, dass sich eine ursprüngliche, nicht ausgegebene Werbeanforderung in einem blockierten Zustand befindet, um es dem Werbeanforderungs-Umschreibemodul zu ermöglichen, eine umgeschriebene Anforderung zu erzeugen, die dem spezifizierten Übertragungsprotokoll entspricht, wobei die umgeschriebene Anforderung der ursprünglichen Werbeanforderung entspricht, die in den Ladeinformationen enthalten ist, und die umgeschriebene Anforderung vom Client-Endgerät ausgegeben wird.

2. Verfahren nach Anspruch 1, wobei die Ladeinformation der Zielseite erhalten wird durch:
Empfangen einer ersten Zugriffsanforderung für die Zielseite, die vom Client-Endgerät ausgegeben wird, und, als Antwort auf die erste Zugriffsanforderung, Rückführen des Erkennungsskripts an das Client-Endgerät, wobei das Erkennungsskript bei seiner Ausführung auf dem Client-Endgerät erkennt, ob eine Werbeblockierungskomponente auf dem Client-Endgerät existiert und ob das Client-Endgerät ein spezifiziertes Übertragungsprotokoll unterstützt, und eine zweite Zugriffsanforderung für die Zielseite erzeugt, wobei die zweite Zugriffsanforderung das Erkennungsergebnis auf dem Client-Endgerät enthält; und
Empfangen der zweiten Zugriffsanforderung, die vom Client-Endgerät ausgegeben wurde, und Abrufen der Ladeinformationen der Zielseite von einem Quellstationsserver auf der Grundlage der zweiten Zugriffsanforderung.

3. Verfahren nach Anspruch 1 oder 2, wobei sich das Werbeanforderungs-Umschreibemodul im Content Delivery Network befindet, und das Verfahren ferner Folgendes umfassend:
Übertragen der Ladeinformationen an das Werbeanforderungs-Umschreibemodul des Content Delivery Networks, damit das Werbeanforderungs-Umschreibemodul die in den Ladeinformationen enthaltene ursprüngliche Werbeanforderung als die dem spezifizierten Übertragungsprotokoll entsprechende umgeschriebene Anforderung umschreiben kann, und Empfangen der mit der enthaltenen umgeschriebenen Anforderung geschriebenen Ladeinformationen, die vom Werbeanforderungs-Umschreibemodul bereitgestellt werden; und
Rückführen der mit der enthaltenen umgeschriebenen Anforderung geschriebenen Ladeinformationen an das Client-Endgerät.

4. Verfahren nach Anspruch 3, wobei, nach Rückführung der mit dem enthaltenen umgeschriebenen Antrag geschriebenen Ladeinformationen an das Client-Endgerät, das Verfahren ferner Folgendes umfasst:
wenn das Client-Endgerät die Ladeinformationen ausführt, Ausgeben, durch das Client-Endgerät, der umgeschriebenen Anforderung an einen Anforderungskonvertierungsserver im Content Delivery Network, wobei:
wobei der Anforderungskonvertierungsserver die umgeschriebene Anforderung auf die ursprüngliche Werbeanforderung wiederherstellt, eine entsprechende Werberessource von einem Werbeserver auf der Grundlage der wiederhergestellten ursprünglichen Werbeanforderung erhält und die erhaltene Werberessource dem Client-Endgerät zur Verfügung stellt.

5. Verfahren nach Anspruch 4, wobei, wenn der Anforderungskonvertierungsserver die vom Client-Endgerät ausgegebene umgeschriebene Anforderung empfängt, das Verfahren ferner Folgendes umfasst:
Bestimmen, durch den Anforderungskonvertierungsserver, ob Cache-Daten vorhanden sind, die der umgeschriebenen Anforderung entsprechen;
bei Vorhandensein der Cache-Daten, die der umgeschriebenen Anforderung entsprechen, Bereitstellen, durch den Anforderungskonvertierungsserver, der Cache-Daten für das Client-Endgerät; und
bei Nichtvorhandensein der Cache-Daten, Erhalten, durch den Anforderungskonvertierungsserver, der entsprechenden Werberessource vom Werbeserver, nach dem Erhalten der Werberessource vom entsprechenden Werbeserver, die Methode ferner Folgendes umfassend:
Zwischenspeichern, durch den Anfragekonvertierungsserver, der erhaltenen Werberessource, damit die zwischengespeicherte Werberessource an einen Initiator der umgeschriebenen Anforderung zurückgeführt werden kann, wenn die umgeschriebene Anforderung für die Werberessource erneut empfangen wird.

6. Verfahren nach Anspruch 2, wobei das Erhalten der Ladeinformationen der Zielseite vom Quellstationsserver auf der Grundlage der zweiten Zugriffsanforderung ferner Folgendes umfasst:
Extrahieren des Erkennungsergebnisses in der zweiten Zugriffsanforderung und Abrufen der Ladeinformationen der Zielseite vom Quellstationsserver, wenn das Erkennungsergebnis darauf hinweist, dass die Werbeblockierungskomponente auf dem Client-Endgerät vorhanden ist.

7. Verfahren nach Anspruch 2, wobei, vor Rückführung des Erkennungsskripts an das Client-Endgerät, das Verfahren ferner Folgendes umfasst:
Bestimmen, ob die Zielseite in einer Werbe-Anti-Blockierliste steht;
wenn erkannt wird, dass die Zielseite in der Werbe-Anti-Blockierliste steht, Erkennen, ob die erste Zugriffsanforderung ein Erkennungsergebnis enthält; und
wenn erkannt wird, dass die erste Zugriffsanforderung kein Erkennungsergebnis enthält, Rückführung des Erkennungsskripts an das Client-Endgerät.

8. Verfahren nach Anspruch 1, wobei, wenn das Erkennungsskript auf dem Client-Endgerät läuft, das Verfahren ferner Folgendes umfasst:
Erhalten einer Zieladresse in einer Blockierliste der Werbeblockierungskomponente, und Laden einer der Zieladresse zugeordneten Seitenressource; und
wenn die Seitenressource erfolgreich geladen wurde, Festlegen eines Indikators, der darauf hinweist, dass auf dem Client-Endgerät keine Werbeblockierungskomponente vorhanden ist.

9. Verfahren nach Anspruch 8, ferner Folgendes umfassend:
wenn die Seitenressource nicht geladen werden kann, Benennen eines Indikators, der darauf hinweist, dass auf dem Client-Endgerät eine Werbeblockierungskomponente vorhanden ist;
Erkennen, ob das Client-Endgerät ein WebRTC-Protokoll unterstützt, und wenn das Client-Endgerät ein WebRTC-Protokoll unterstützt, Festlegen eines Zahlenwertes, der die Unterstützung des WebRTC-Protokolls anzeigt, und wenn das Client-Endgerät kein WebRTC-Protokoll unterstützt, Erkennen, ob das Client-Endgerät ein WebSocket-Protokoll unterstützt, und wenn das Client-Endgerät ein WebSocket-Protokoll unterstützt, Festlegen eines Zahlenwertes, der die Unterstützung des WebSocket-Protokolls angibt; und
Einbeziehen des festgelegten Indikators und der festgelegten Zahlenwerte in das Erkennungsergebnis.

10. Verfahren nach Anspruch 1, wobei das Erzeugen, durch das Werbeanforderungs-Umschreibemodul, der umgeschriebenen Anforderung, die mit dem spezifizierten Übertragungsprotokoll übereinstimmt, wobei die umgeschriebene Anforderung der ursprünglichen Werbeanforderung entspricht, die in den Ladeinformationen enthalten ist, ferner Folgendes umfasst:
Vorläufiges Ausführen der Ladeinformationen, durch das Werbeanforderungs-Umschreibemodul und Erhalten der ursprünglichen Werbeanforderung, die während des vorläufigen Ausführens der Ladeinformationen ausgegeben wurde; und
wenn bestimmt wird, dass die ursprüngliche Werbeanforderung in einem blockierten Zustand ist, Erzeugen, durch das Werbeanforderungs-Umschreibemodul, der umgeschriebenen Anforderung, die dem spezifizierten Übertragungsprotokoll entspricht, das der ursprünglichen Werbeanforderung entspricht, und Schreiben der umgeschriebenen Anforderung in die Ladeinformationen.

11. Content Delivery Network, umfassend einen Edge-Knoten und ein Werbeanforderungs-Umschreibemodul, wobei:
wobei der Edge-Knoten dafür konfiguriert ist, eine von einem Client-Endgerät ausgegebene Zugriffsanforderung für eine Zielseite zu empfangen und als Antwort auf die Zugriffsanforderung eine Antwort einschließlich eines Erkennungsskripts an das Client-Endgerät zurückzuführen, wobei das Erkennungsskript bei seiner Ausführung auf dem Client-Endgerät erkennt, ob eine Werbeblockierungskomponente auf dem Client-Endgerät vorhanden ist und ob das Client-Endgerät ein spezifiziertes Übertragungsprotokoll unterstützt, in dem das angegebene Übertragungsprotokoll das WebRTC-Protokoll oder das WebSocket-Protokoll ist, und bestimmt, ob Ladeinformationen der Zielseite an ein Werbeanforderungs-Umschreibemodul auf der Grundlage eines Erkennungsergebnisses auf dem Client-Endgerät übertragen werden sollen, wobei die Ladeinformationen ein Seitencode sind, der vom Client-Endgerät ausgeführt werden kann; und
wobei das Werbeanforderungs-Umschreibemodul dafür konfiguriert ist, eine umgeschriebene Anforderung zu erzeugen, die dem spezifizierten Übertragungsprotokoll entspricht, wobei die umgeschriebene Anforderung einer ursprünglichen Werbeanforderung entspricht, die in den Ladeinformationen enthalten ist, wobei, wenn bestimmt wird, dass die nicht ausgegebene ursprüngliche Werbeanforderung in einem blockierten Zustand ist, Versorgen des Edge-Knotens mit den Ladeinformationen, die mit der enthaltenen umgeschriebenen Anforderung geschrieben wurden, und wobei die umgeschriebene Anforderung vom Client-Endgerät ausgegeben wird.

12. Content Delivery Network nach Anspruch 11, ferner umfassend einen Anforderungskonvertierungsserver, wobei:
der Anforderungskonvertierungsserver dafür konfiguriert ist, die vom Client-Endgerät ausgegebene umgeschriebene Anforderung zu empfangen, die umgeschriebene Anforderung auf die ursprüngliche Werbeanforderung wiederherzustellen, eine entsprechende Werberessource von einem Werbeserver auf der Grundlage der wiederhergestellten ursprünglichen Werbeanforderung zu erhalten und die erhaltene Werberessource dem Client-Endgerät zur Verfügung zu stellen.

13. Verfahren zum Verhindern der Blockierung von Webseitenwerbung für ein Client-Endgerät, Folgendes umfassend:
Ausgeben einer Anforderung für den Zugriff auf eine Zielseite an einen Edge-Knoten in einem Content Delivery Network und Empfangen einer Antwort einschließlich eines Erkennungsskripts, das vom Edge-Knoten zurückgeführt wird;
Ausführen des Erkennungsskripts, um zu erkennen, ob eine Werbeblockierungskomponente vorhanden ist und ob ein spezifiziertes Übertragungsprotokoll unterstützt wird, wobei das spezifizierte Übertragungsprotokoll das WebRTC-Protokoll oder das WebSocket-Protokoll ist, und um zu bestimmen, ob Ladeinformationen der Zielseite an ein Werbeanforderungs-Umschreibemodul auf der Grundlage eines Erkennungsergebnisses übertragen werden sollen, wobei die Ladeinformationen ein Seitencode sind, der vom Client-Endgerät ausgeführt werden kann, wenn bestimmt wird, dass eine ursprüngliche, nicht ausgegebene Werbeanforderung sich in einem blockierten Zustand befindet, damit das Werbeanforderungs-Umschreibemodul eine umgeschriebene Anforderung erzeugen kann, die dem angegebenen Übertragungsprotokoll entspricht, wobei die umgeschriebene Anforderung der ursprünglichen, in den Ladeinformationen enthaltenen Werbeanforderung entspricht und die umgeschriebene Anforderung vom Client-Endgerät ausgegeben wird;
beim Ausführen der Ladeinformationen, Ausgeben der umgeschriebene Anforderung an einen Anforderungskonvertierungsserver im Content Delivery Network, damit der Anforderungskonvertierungsserver die umgeschriebene Anforderung auf die ursprüngliche Werbeanforderung wiederherstellen und eine entsprechende Werberessource von einem Anzeigenserver auf der Grundlage der wiederhergestellten ursprünglichen Werbeanforderung erhalten kann; und
Empfangen der vom Anforderungskonvertierungsserver rückgeführten Werberessource.

14. Verfahren nach Anspruch 13, wobei das Ausführen des Erkennungsskripts Folgendes umfasst:
Erhalten einer Zieladresse in einer Blockierliste der Werbeblockierungskomponente im Voraus, und Laden einer der Zieladresse zugeordneten Seitenressource; und
wenn die Seitenressource erfolgreich geladen wurde, Festlegen eines Indikators, der darauf hinweist, dass keine Werbeblockierungskomponente vorhanden ist.

15. Verfahren nach Anspruch 14, ferner Folgendes umfassend:
wenn die Seitenressource nicht geladen werden kann, Benennen eines Indikators, der darauf hinweist, dass eine Werbeblockierungskomponente vorhanden ist;
Erkennen, ob das Client-Endgerät ein WebRTC-Protokoll unterstützt, und wenn das Client-Endgerät ein WebRTC-Protokoll unterstützt, Festlegen eines Zahlenwertes, der die Unterstützung des WebRTC-Protokolls anzeigt, und wenn das Client-Endgerät kein WebRTC-Protokoll unterstützt, Erkennen, ob das Client-Endgerät ein WebSocket-Protokoll unterstützt, und wenn das Client-Endgerät ein WebSocket-Protokoll unterstützt, Festlegen eines Zahlenwertes, der die Unterstützung des WebSocket-Protokolls angibt; und
Einbeziehen des festgelegten Indikators und der festgelegten Zahlenwerte in das Erkennungsergebnis.

## Revendications

1. Procédé d'anti-blocage de publicité de page Web pour un réseau de distribution de contenu, le procédé comprenant :
la réception d'une demande d'accès pour une page cible émise par un terminal client, et en réponse à la demande d'accès, le renvoi d'une réponse comportant un script de détection au terminal client, le script de détection, lorsqu'il s'exécute sur le terminal client, détectant s'il existe un composant de blocage de publicité sur le terminal client ou non et si le terminal client prend en charge un protocole de transmission spécifié ou non, dans lequel le protocole de transmission spécifié est le protocole WebRTC ou WebSocket, et détermine, sur la base d'un résultat de détection sur le terminal client, s'il faut transmettre les informations de chargement de la page cible à un module de réécriture de demande de publicité, où les informations de chargement sont du code de page qui peut être exécuté par le terminal client, lorsqu'il est déterminé qu'une demande de publicité originale non émise se trouve dans un état bloqué, pour permettre au module de réécriture de demande de publicité de générer une demande réécrite conforme au protocole de transmission spécifié, la demande réécrite correspondant à la demande de publicité originale incluse dans les informations de chargement, et la demande réécrite étant émise par le terminal client.

2. Procédé selon la revendication 1, les informations de chargement de la page cible étant obtenues :
en recevant une première demande d'accès pour la page cible émise par le terminal client, et, en réponse à la première demande d'accès, en renvoyant le script de détection au terminal client, le script de détection, lorsqu'il est exécuté sur le terminal client, détecte s'il existe un composant de blocage de publicité sur le terminal client ou non et si le terminal client prend en charge un protocole de transmission spécifié ou non, et génère une seconde demande d'accès pour la page cible, la seconde demande d'accès comportant le résultat de détection sur le terminal client ; et
en recevant la deuxième demande d'accès émise par le terminal client, et en obtenant les informations de chargement de la page cible à partir d'un serveur de station source sur la base de la deuxième demande d'accès.

3. Procédé selon la revendication 1 ou 2, le module de réécriture de demande de publicité étant situé dans le réseau de distribution de contenu, et le procédé comportant en outre :
la transmission des informations de chargement sur le module de réécriture de demande de publicité du réseau de distribution de contenu, pour permettre au module de réécriture de demande de publicité de réécrire la demande de publicité originale incluse dans les informations de chargement en tant que demande de réécriture conforme au protocole de transmission spécifié, et la réception des informations de chargement écrites avec la demande réécrite incluse fournie par le module de réécriture de demande de publicité ; et
le renvoi des informations de chargement écrites avec la demande réécrite incluse au terminal client.

4. Procédé selon la revendication 3, après avoir renvoyé les informations de chargement écrites avec la demande réécrite incluse au terminal client, le procédé comporte en outre :
lorsque le terminal client exécute les informations de chargement, l'émission, par le terminal client, de la demande réécrite vers un serveur de conversion de demande dans le réseau de distribution de contenu :
le serveur de conversion de demande restaurant la demande réécrite à la demande de publicité originale, obtenant une ressource de publicité correspondante d'un serveur de publicité sur la base de la demande de publicité originale restaurée, et fournissant la ressource de publicité obtenue au terminal client.

5. Procédé selon la revendication 4, lorsque le serveur de conversion de demande reçoit la demande réécrite émise par le terminal client, le procédé comporte en outre :
la détermination du fait, par le serveur de conversion de demande, qu'il existe des données de cache correspondant à la demande réécrite ;
s'il existe des données de cache correspondant à la demande réécrite, la fourniture, par le serveur de conversion de demande, des données de cache au terminal client ; et
s'il n'existe pas de données de cache, l'obtention, par le serveur de conversion de demande, de la ressource publicitaire correspondante du serveur publicitaire, après avoir obtenu la ressource publicitaire du serveur publicitaire correspondant, le procédé comporte en outre :
la mise en cache, par le serveur de conversion de demande, de la ressource de publicité obtenue, pour permettre à la ressource de publicité mise en cache d'être renvoyée à un initiateur de la demande réécrite lorsque la demande réécrite pour la ressource de publicité est à nouveau reçue.

6. Procédé selon la revendication 2, l'obtention des informations de chargement de la page cible à partir du serveur de la station source sur la base de la seconde demande d'accès comportant en outre :
l'extraction du résultat de détection dans la seconde demande d'accès, et l'obtention des informations de chargement de la page cible à partir du serveur de la station source lorsque le résultat de détection indique que le composant de blocage de publicité existe sur le terminal client.

7. Procédé selon la revendication 2, avant de renvoyer le script de détection au terminal client, le procédé comporte en outre :
la détermination du fait que la page cible se trouve dans une liste d'anti-blocage de publicité ;
lorsqu'il est détecté que la page cible se trouve dans la liste d'anti-blocage de publicité, la détection du fait que la première demande d'accès comporte un résultat de détection ; et
lorsqu'il est détecté que la première demande d'accès ne comporte pas de résultat de détection, le renvoi du script de détection au terminal client.

8. Procédé selon la revendication 1, lorsque le script de détection s'exécute sur le terminal client, le procédé comporte en outre :
l'obtention d'une adresse cible dans une liste de blocage du composant de blocage de publicité, et le chargement d'une ressource de page associée à l'adresse cible ; et
si la ressource de page est chargée avec succès, la désignation d'un indicateur pour indiquer qu'il n'existe pas de composant de blocage de publicité sur le terminal client.

9. Procédé selon la revendication 8, comprenant en outre :
si la ressource de page ne parvient pas à être chargée, la désignation d'un indicateur pour indiquer qu'il existe un composant de blocage de publicité sur le terminal client ;
la détection du fait que le terminal client prend en charge un protocole WebRTC ou non, et si le terminal client prend en charge un protocole WebRTC, la désignation d'une valeur numérique pour signifier la prise en charge du protocole WebRTC, et si le terminal client ne prend pas en charge un protocole WebRTC, la détection du fait que le terminal client prend en charge un protocole WebSocket ou non, et si le terminal client prend en charge un protocole WebSocket, la désignation d'une valeur numérique pour signifier la prise en charge du protocole WebSocket ; et
l'inclusion des indicateurs désignés et des valeurs numériques désignées dans le résultat de détection.

10. Procédé selon la revendication 1, la génération, par le module de réécriture de demande de publicité, de la demande de réécriture conforme au protocole de transmission spécifié, la demande de réécriture correspondant à la demande de publicité originale incluse dans les informations de chargement comporte en outre :
la pré-exécution des informations de chargement, par le module de réécriture de demande de publicité, et l'obtention de la demande de publicité originale émise pendant la pré-exécution des informations de chargement ; et
lorsqu'il est déterminé que la demande de publicité originale se trouve dans un état bloqué, la génération, par le module de réécriture de demande de publicité, de la demande de réécriture conforme au protocole de transmission spécifié correspondant à la demande de publicité d'origine, et l'écriture de la demande de réécriture dans les informations de chargement.

11. Réseau de distribution de contenu, comprenant un nœud périphérique et un module de réécriture de demande de publicité :
le nœud périphérique étant configuré pour recevoir une demande d'accès pour une page cible émise par un terminal client, et en réponse à la demande d'accès, pour renvoyer une réponse comportant un script de détection au terminal client, le script de détection, lors de l'exécution sur le terminal client, détectant s'il existe un composant de blocage de publicité sur le terminal client ou non et si le terminal client prend en charge un protocole de transmission spécifié ou non, dans lequel le protocole de transmission spécifié est le protocole WebRTC ou le protocole WebSocket, et détermine s'il faut transmettre les informations de chargement de la page cible à un module de réécriture de demande de publicité sur la base d'un résultat de détection sur le terminal client, où les informations de chargement sont du code de page qui peut être exécuté par le terminal client ; et
le module de réécriture de demande de publicité est configuré pour générer une demande de réécriture conforme au protocole de transmission spécifié, la demande de réécriture correspondant à une demande de publicité originale incluse dans les informations de chargement, lorsqu'il est déterminé que la demande de publicité originale non émise se trouve dans un état bloqué, fournir au nœud périphérique les informations de chargement écrites avec la demande réécrite incluse, et la demande réécrite étant émise par le terminal client.

12. Réseau de distribution de contenu selon la revendication 11, comprenant en outre un serveur de conversion de demande :
le serveur de conversion de demande étant configuré pour recevoir la demande réécrite émise par le terminal client, restaurer la demande réécrite à la demande de publicité originale, obtenir une ressource de publicité correspondante d'un serveur de publicité sur la base de la demande de publicité originale restaurée, et fournir la ressource de publicité obtenue au terminal client.

13. Procédé d'anti-blocage de publicité de page Web pour un terminal client, comprenant :
l'émission d'une demande d'accès pour une page cible vers un nœud périphérique dans un réseau de distribution de contenu, et la réception d'une réponse comportant un script de détection renvoyé par le nœud périphérique ;
l'exécution du script de détection pour détecter s'il existe un composant de blocage de publicité et si un protocole de transmission spécifié est pris en charge, dans lequel le protocole de transmission spécifié est le protocole WebRTC ou WebSocket, et pour déterminer s'il faut transmettre les informations de chargement de la page cible à un module de réécriture de demande de publicité sur la base d'un résultat de détection, où les informations de chargement sont du code de page qui peut être exécuté par le terminal client, lorsqu'il est déterminé qu'une demande de publicité originale non émise se trouve dans un état bloqué, pour permettre au module de réécriture de demande de publicité de générer une demande réécrite conforme au protocole de transmission spécifié, la demande réécrite correspondant à la demande de publicité originale incluse dans les informations de chargement, et la demande réécrite étant émise par le terminal client ;
lors de l'exécution des informations de chargement, l'émission de la demande réécrite à un serveur de conversion de demande dans le réseau de distribution de contenu pour permettre au serveur de conversion de demande de restaurer la demande réécrite à la demande de publicité d'origine et d'obtenir une ressource de publicité correspondante d'un serveur de publicité sur la base de la demande de publicité originale restaurée ; et
la réception de la ressource publicitaire renvoyée par le serveur de conversion de demande.

14. Procédé selon la revendication 13, l'exécution du script de détection comportant :
l'obtention à l'avance d'une adresse cible dans une liste de blocage du composant de blocage de publicité, et le chargement d'une ressource de page associée à l'adresse cible ; et
si la ressource de page est chargée avec succès, la désignation d'un indicateur pour indiquer qu'il n'existe pas de composant de blocage de publicité.

15. Procédé selon la revendication 14, comprenant en outre :
si la ressource de page ne parvient pas à être chargée, la désignation d'un indicateur pour indiquer qu'il existe un composant de blocage de publicité ;
la détection du fait que le terminal client prend en charge un protocole WebRTC et que le terminal client prend en charge un protocole WebRTC, la désignation d'une valeur numérique pour signifier la prise en charge du protocole WebRTC, et si le terminal client ne prend pas en charge un protocole WebRTC, la détection du fait que le terminal client prend en charge un protocole WebSocket, et si le terminal client prend en charge un protocole WebSocket, la désignation d'une valeur numérique pour signifier la prise en charge du protocole WebSocket ; et
l'inclusion des indicateurs désignés et des valeurs numériques désignées dans le résultat de détection.
